# EUROPÄISCHE PATENTSCHRIFT

(11) **EP 3 658 396 B1**
(45) Veröffentlichungstag und Bekanntmachung des Hinweises auf die Patenterteilung: **27.01.2021**
(21) Anmeldenummer: 18803605.7
(22) Anmeldetag: 09.11.2018
(51) Int. Cl.: B60H 1/32, D04H 1/407

(54) **KÜHLVORRICHTUNG FÜR FAHRZEUGINNENRÄUME**
COOLING DEVICE FOR VEHICLE INTERIORS
DISPOSITIF DE REFROIDISSEMENT POUR HABITACLES DE VÉHICULES

(30) Priorität: 09.11.2017 DE 102017126281
(43) Veröffentlichungstag der Anmeldung: 03.06.2020
(73) Patentinhaber: pervormance international GmbH, 89075 Ulm (DE)
(72) Erfinder: RENNER, Gabriele, 89275 Elchingen (DE)
(74) Vertreter: Frick, Robert
(86) Internationale Anmeldenummer: PCT/EP2018/080774
(87) Internationale Veröffentlichungsnummer: WO 2019/092183

(56) Entgegenhaltungen:
- EP-A1- 2 477 588
- EP-A2- 0 962 344
- DE-A1- 4 127 337
- DE-A1- 19 932 691
- DE-A1-102005 023 025
- DE-A1-102014 216 450
- DE-A1-102015 003 660
- DE-A1-102015 213 009

## Beschreibung

Die Erfindung betrifft ein Fahrzeug mit einem Innenraum wie beispielsweise einer Personenkabine oder einem Laderaum, wobei ein mit Feuchtigkeit beladbares Textil zur energieeffizienten Kühlung des Innenraums vorgesehen ist.

Im Stand der Technik werden Innenräume von Fahrzeugen in der Regel anhand von Klimaanlagen gekühlt. Deren Nachteil ist ein hoher Energiebedarf, der beispielsweise im Falle von Personenkraftwägen zu einem erhöhten Kraftstoffbedarf und einer geringeren Reichweite führt. Bisher wurde entweder der hohe Energiebedarf in Kauf genommen oder auf eine Kühlung verzichtet. Insbesondere in Personenkabinen kommt ein Verzicht auf eine Kühlung aber immer weniger in Betracht und in elektrisch betriebenen Fahrzeugen kommt der Reichweite eine noch größere Bedeutung zu als in herkömmlichen Fahrzeugen mit Verbrennungsmotor.

In der EP 2 477 588 B1 werden Vliesstoffe zum Einsatz in der Textilindustrie offenbart, in denen Partikel aus einem superabsorbierenden Polymer aufgenommen sind. Die Vliesstoffe können daher signifikante Wassermengen aufnehmen und durch fortlaufendes Verdunsten des Wassers eine Kühlwirkung erzielen.

Auch die DE 10 2005 023 025 A1 offenbart ein Kühlsystem umfassend einen mit Superabsorbern beladenen Vlies sowie eine Befeuchtungseinrichtung zum Befeuchten des Vlieses vor dem Einsatz.

Die DE 10 2007 027 828 A1 offenbart einen Autositz, in dem eine Temperier-Einrichtung zur Temperierung der Sitzfläche eingearbeitet ist.

Die DE 20 2007 017 447 U1 offenbart eine Temperier-Einrichtung für Kabinenelemente eines Autos, beispielsweise Sitze, Türverkleidungen, Armaturenbretter etc., die auf der Grundlage eines thermoelektrischen Wandlers operiert.

Die DE 10 2015 013 819 A1 offenbart eine Temperier-Einrichtung für einen Autositz, die ein elektrisches Heizelement und ein Phasenwechselmaterial umfasst.

Die DE 199 32 691 A1 offenbart eine Autoklimaanlage, wobei anfallendes Kondenswasser aufgefangen und zur Befeuchtung bzw. Vorkühlung der Luft eingesetzt wird.

Die DE 10 2015 003 660 A1 offenbart eine Autoklimaanlage umfassend einen Vliesstoff, der mit Wasser getränkt wird.

Aufgabe der Erfindung ist die Bereitstellung einer energieeffizienten Lösung zur Kühlung von Fahrzeuginnenräumen, welche Klimaanlagen unterstützen oder sogar ersetzen kann.

Vor diesem Hintergrund betrifft die Erfindung ein Fahrzeug mit einem Innenraum, vorzugsweise einer Personenkabine oder einem Lastenraum, wobei in oder in thermischem Kontakt mit dem Innenraum ein Textil angeordnet ist, das einen Vliesstoff umfasst, der mit einem superabsorbierenden Polymer beladen ist.

Der Vliesstoff bzw. genauer gesagt das superabsorbierende Polymer des Vliesstoffs kann fortwährend oder wiederholt mit Wasser beladen werden, welches dann nach und nach wieder aus dem Vliesstoff bzw. Polymer verdunstet, sodass eine Kühlwirkung erreicht wird. Aufgrund dieser Kühlwirkung kann das Textil eine im Fahrzeug befindliche Klimaanlage unterstützen oder sogar ersetzen.

Der Vliesstoff kann beispielsweise aus Kunstfasern wie Polyester gefertigt werden. Auch andere Kunst- oder Naturfasern sind aber denkbar. Das superabsorbierende Polymer kann in Form von Partikeln vorliegen, die im Vliesstoff verteilt sind. Bevorzugt ist aber, dass die Vliesfasern direkt mit einem superabsorbierenden Polymer beschichtet sind. Dadurch wird eine Klumpenbildung vermieden und es kann eine gleichmäßige Verteilung der Feuchtigkeit über den gesamten Vliesstoff erreicht werden. Chemisch gesehen handelt es sich bei dem superabsorbierenden Polymer um ein quervernetztes Polymer mit polaren Eigenschaften. Beispiele umfassen quervernetzte Varianten von Polyacrylamid, Co-Acrylsäure-Acrylamid oder Polyvinylpyrrolidon. Diese Polymere können große Mengen an Wasser, teilweise mehr als das 1000fache ihres Eigengewichts an Wasser in ihrem Inneren binden. Sie quellen dabei auf. Das superabsorbierende Polymer bindet das Wasser dabei fest und gibt kein flüssiges Wasser ab. Es kann lediglich unter Aufwand von Wärmeenergie wieder aus dem Polymer verdampft werden.

Bevorzugte Ausgestaltungen des Textils können der Beschreibung des Patents EP 2 477 588 B1 entnommen werden.

Der Vliesstoff kann einseitig oder beidseitig mit einer Gewebeschicht überzogen sein, um diesen vor mechanischer Einwirkung zu schützen und optisch zu kaschieren.

Eine Kühlung der Personenkabine kann besonders im Fokus stehen, da ein angenehmes Raumklima für die Passagiere seit längerem zu den Grundanforderungen eines Fahrzeugs gehört und unbedingt zu gewährleisten ist. Daneben ist aber auch eine Anordnung des Textils in oder im Bereich von reinen Lastenräumen oder dem Lastentransport dienenden Abschnitten von Fahrzeuginnenräumen denkbar. Auf eine Kühlung solcher Räume oder Raumteile wurde bisher aus energetischen Gründen oftmals verzichtet, eine Kühlung kann aber auch dort wünschenswert sein, um temperaturempfindliche Waren vor Temperatureinflüssen zu schützen.

In einer Ausführungsform ist vorgesehen, dass es sich bei dem Fahrzeug um einen elektrisch betriebenen Personenkraftwagen handelt. In rein elektrisch betriebenen Autos und auch Hybridfahrzeugen mit ergänzendem Elektromotor ist die mit einer Batterieladung erreichbare Reichweite von zentraler Bedeutung, sodass ein besonderes Interesse daran besteht, den Energieaufwand für die Kühlung des Innenraums möglichst gering zu halten.

Gemäß der Erfindung ist vorgesehen, dass eine Befeuchtungsvorrichtung vorgesehen ist, die ausgebildet ist, Wasser an das Textil abzugeben. Die Befeuchtungsvorrichtung kann beispielsweise eine oder mehrere Sprühdüsen, gegebenenfalls mit Zerstäuber aufweisen, um Wasser auf dem Textil zu verteilen. In einer alternativen Ausgestaltung kann die Befeuchtungsvorrichtung eine Wasserleitung wie beispielsweise einen Schlauch mit mehreren Austrittsöffnungen umfassen. Die Düsen bzw. Abgabeöffnungen können über die gesamte Oberfläche des Textils verteilt angeordnet sein. Die Befeuchtungsvorrichtung kann mit einem Wasserreservoir in Verbindung stehen, beispielsweise einem Tank, der von einem Benutzer mit Wasser befüllt werden kann. Die Befeuchtungsvorrichtung kann mit einer Steuereinheit in Verbindung stehen, die ausgebildet ist, das Textil in Abhängigkeit einer bestimmten Routine oder Steuervorgabe mit Wasser zu beladen. Die Befeuchtungsvorrichtung kann eine Pumpe zur Förderung von Wasser aufweisen, die beispielsweise mit einem Photovoltaikelement an der Außenseite des Fahrzeugs oder einem Wechselakku in Verbindung stehen kann, sodass überhaupt kein Strom aus der Fahrzeugbatterie benötigt wird.

In einer Ausführungsform ist vorgesehen, dass ein Belüftungsmechanismus vorgesehen ist, der ausgebildet ist, Luft über das Textil zu leiten. Vorzugsweise wird Luft an der Oberfläche des Textils entlang geleitet, sodass Wasserdampf aus dem Vliesstoff mitgenommen und die Verdunstung weiteren Wassers begünstigt wird.

Das Textil kann beispielsweise in oder an einem Luftleitkanal mit einer Einlassöffnung und einer Auslassöffnung angeordnet sein. Die Einlassöffnung kann ausgebildet sein, Luft aus dem Innenraum in den Luftleitkanal zu leiten. Dies hat einerseits den Vorteil, dass dem Innenraum warme Luft entzogen wird, und andererseits den Vorteil, dass warme Luft aus dem Innenraum zu einer schnelleren Wasserverdampfung und somit eine höhere Kühlleistung pro Zeiteinheit führt. In einer anderen Variante ist die Einlassöffnung ausgebildet sein, Luft von außerhalb des Fahrzeugs in den Luftleitkanal zu leiten. Die Verwendung von Außenluft kann insbesondere deshalb vorteilhaft sein, da diese bereits durch die Bewegung des Fahrzeugs durch den Luftleitkanal gedrückt werden kann. Es kann auch vorgesehen sein, dass die Einlassöffnung mit der Lüftungsanlage des Fahrzeugs in Verbindung steht. Die Auslassöffnung kann ausgebildet sein, Luft aus dem Luftleitkanal in die Umgebung außerhalb des Innenraums zu leiten. Dies hat den Vorteil, dass feuchtigkeitsbeladene Luft nicht mehr zurück in den Innenraum gelangt. Ein Gebläse kann vorgesehen sein, um Luft durch den Luftleitkanal zu fördern. Zur Steuerung des Luftzuges durch den Kanal können Luftleitelemente wie Klappen oder Ventile vorgesehen sein, die mit einer Steuereinheit in Verbindung stehen oder manuell eingestellt werden können.

Ferner können ein oder mehrere auf das Textil gerichtete Luftdüsen vorgesehen sein, die mit einem Gebläse in Verbindung stehen oder bewegte Außenluft abgeben. Die Luftdüsen können verschließbar und verstellbar sein. Es ist die Anordnung mehrerer Düsen denkbar, die über die Fläche des Textils verteilt angeordnet sind.

In einer Ausführungsform ist vorgesehen, dass zum Binden von überflüssigem Wasser im Textil oder von Feuchtigkeit in der vom Textil abgeleiteten Abluft ein Sammler umfassend eine gegebenenfalls mit einem Abfluss ausgestattete Auffangschale und/oder feuchtigkeitsbindende Stoffe vorgesehen ist.

In einer Ausführungsform ist vorgesehen, dass ein Beladungssensor vorgesehen ist, der ausgebildet ist, die Beladung des Textils mit Wasser zu erkennen. Bei dem Sensor kann es sich beispielsweise um einen Gewichtssensor oder einen Feuchtigkeitssensor handeln. Auch die Temperatur des Textils kann gemessen werden, um zu erkennen, ob dieses noch kühlt und entsprechend noch mit ausreichend Wasser beladen ist.

In einer Ausführungsform ist eine Steuereinheit vorgesehen, die mit der Befeuchtungsvorrichtung und/oder dem Belüftungsmechanismus in Verbindung steht. Beispielsweise kann das Signal eines Beladungssensors von der Steuereinheit des Fahrzeugs dazu benutzt werden, um im Zusammenspiel mit anderen Parametern (Benutzervorgabe, voreingestellte Parameter, gemessene Umgebungs- oder Innentemperatur, etc.) die Befeuchtungsvorrichtung anzusteuern und/oder die Belüftung des Textil zu regulieren. Die Steuereinheit kann ausgebildet sein, um beispielsweise mit Hilfe einer Smartphone-App oder anhand von anderen digitalen Medien auch von außerhalb des Fahrzeugs bedient zu werden, um das Fahrzeug vorkühlen zu können. Die Steuereinheit kann mit einer Anzeigeeinrichtung des Fahrzeugs verbunden sein.

In einer Ausführungsform kann ein Heizmechanismus für das Textil vorgesehen sein. Dieser kann dem Zweck dienen, die Verdunstungsleistung kurzfristig zu erhöhen oder das Textil zu trocken, sofern dies gewünscht ist. Vorteilhafterweise kommt der Heizmechanismus ohne Energie aus. In Frage kommt ein Mechanismus zur Einleitung von Abwärme aus dem Motor oder von der Karosserie.

In einer Ausführungsform ist vorgesehen, dass Wärmeleitelemente zur Einleitung von Wärme aus dem Innenraum in das Textil vorgesehen sind. Beispiele umfassen Wärmeleitbleche oder Wärmerohre, die zwischen Innenraum und dem Textil angoerdnet werden können, um für einen verbesserte Wärmeleitung zu sorgen.

In einer Ausführungsform sind im Textil im Bereich des Vliesstoffes und/oder im Bereich eines Gewebeüberzugs metallische Garne eingearbetet. Diese können sowohl die Wärmeleitung in das Textil begünstigen als auch der elektrischen Signalübertragung von oder zu einem Beladungssensor dienen.

Um ein Verkeimen des Textils zu verhindern kann einerseits vorgesehen sein, dass in dem Textil antimikrobiell wirkende Stoffe wie beispielsweise Silberionen eingearbeitet sind. Alternativ oder zusätzlich kann eine Bestrahlungsvorrichtung vorgesehen sein, die ausgebildet ist, das Textil und/oder das Wasser vor dessen Beaufschlagung mit UV-Licht zu bestrahlen. Ferner kann der Tank mit Wasser gefüllt sein, das mit einem antimikrobiell wirkenden Stoff wie beispielsweise Wasserstoffperoxid versetzt ist.

In einer Ausführungsform ist vorgesehen, dass das Textil wechselbar in einem Gehäuse angeordnet ist. Es kann beispielsweise aus hygienischen Gründen wünschenswert sein, das Textil in regelmäßigen Abständen, beispielsweise innerhalb eines gewöhnlichen Servicezyklus des Fahrzeugs zu wechseln. Beispielsweise kann das Textil in einen Rahmen aufgenommen sein, der seinerseits lösbar mit dem Gehäuse in Verbindung steht. Das Gehäuse kann ausgebildet sein, um ein werkzeugfreies Wechseln des Textils zu ermöglichen.

In einer Ausführungsform ist vorgesehen, dass das Textil unter der Decke des Innenraums angeordnet ist. Eine derartige Anordnung kann aus mehreren Gründen günstig sein. Zum einen steht an der Decke des Innenraums typischerweise eine große Fläche zur Verfügung, über die sich das Textil erstrecken kann und an der es optisch optimal kaschiert werden kann. Ferner ist eine vollflächige Belüftung und eine Abfuhr der feuchten Luft in einfacher Weise möglich. Letztlich ist die Temperatur nahe der Decke typischerweise am höchsten, was zu einer optimalen Kühlwirkung führt. An der Fahrzeugdecke durch beispielsweise Sonenneinstrahlung entstehende Wärme kann unmittelbar in latente Wärme umgewandelt werden, bevor sich die Temperatur im Innenraum erhöht. Eine Befeuchtungsvorrichtung und/oder ein Luftleitkanal bzw. Belüftungsdüsen können in dieser Ausführungsform beispielsweise oberhalb des Textils, also entlang der Decke angeordnet werden.

In einer Ausführungsform ist vorgesehen, dass im Innenraum des Fahrzeugs ein Passagiersitz vorgesehen ist und dass das Textil an diesem Passagiersitz angeordnet ist, vorzugsweise im Bereich der Rückenlehne. In dieser Ausführungsform kann das Textil in den Passagiersitz einer Personenkabine eingearbeitet oder daran befestigt sein. Denkbar ist beispielsweise, dass der Passagiersitz im Bereich der Rückenlehne ein Netz oder ein Abstandsgewirk umfasst, hinter dem das Textil eingearbeitet oder lösbar befestigt ist. Der Passagiersitz kann mit einer Befeuchtungsvorrichtung und einem Belüftungssystem ausgestattet sein, wie es oben beschrieben wurde. Denkbar ist ferner die Anordnung des Textils an einem Aufsatz, der seinerseits auf dem Sitz befestigt ist. Geeignete Aufsätze umfassen beispielsweise Lordosenstützen. In dieser Variante können auch bestehende Fahrzeuge mit dem Kühltextil nachgerüstet werden. Denkbar ist auch eine Anordnung des Textils im Bereich einer Armstütze des Passagiersitzes. Oftmals sind gerade die Armlehnen zur Lüftungsanlage des Fahrzeugs exponiert, sodass sich hier eine besonders starke Verdunstung und folglich Kühlung ergeben kann. Der Vorteil einer Anbringung des Textils direkt im Sitz ist eine unmittelbare Kühlwirkung für den Passagier sowie der Nebeneffekt einer effektiven Schweißableitung.

In einer Ausführungsform kann das Textil in Flächen des Innenraums angeordnet sein, die sich unterhalb schräger Scheiben befinden, beispielsweise im Bereich zwischen Armaturenbrett und Windschutzscheibe und/oder im Bereich zwischen (Rück-)Sitzen und der Rückscheibe, oberhalb des Kofferraums.

In einer Ausführungsform ist vorgesehen, dass an der Oberfläche des Textils einseitig oder beidseitig ein Abstandsgewirk angeordnet ist. Durch die Anordnung eines Abstandsgewirks kann die Luftzufuhr zu dem Textil verbessert werden, unter anderem auch wenn dieses einseitig an einem Fahrzeugteil anliegt oder dem Rücken eines Passagiers zugewandt ist. Ferner kann das Abstandsgewirk eine optisch ansprechende Kaschierung darstellen und beispielsweise bei einer Abordnung des Textils im Deckenbereich einer Personenkabine als Dachhimmel dienen.

Das erfindungsgemäße Textil kann auch als Innenabdeckung von Scheiben zum Einsatz kommen, um insbesondere auch während des Stillstandes des Fahrzeuges ein Aufheizen des Innenraums zu verhindern oder zumindest zu mindern.

Weitere Einzelheiten und Vorteile der Erfindung ergeben sich aus den nachfolgend anhand der Figuren dargestellten Ausführungsbeispielen. In den Figuren zeigen:
- Figur 1:: eine schematische Darstellung eines Textils, das im Bereich der Innenraumdecke eines erfindungsgemäßen Fahrzeugs angeordnet ist;
- Figur 2:: eine schematische Darstellung eines Passagiersitzes, der im Innenraum eines erfindungsgemäßen Fahrzeugs angeordnet ist;
- Figur 3:: Darstellungen möglicher Ausgestaltungen einer Befeuchtungsvorrichtung für das Textil; und
- Figur 4:: eine elektronenmikroskopische Aufnahme eines Vliesstoffs, der sich für einen erfindungsgemäßen Einsatz eignet.

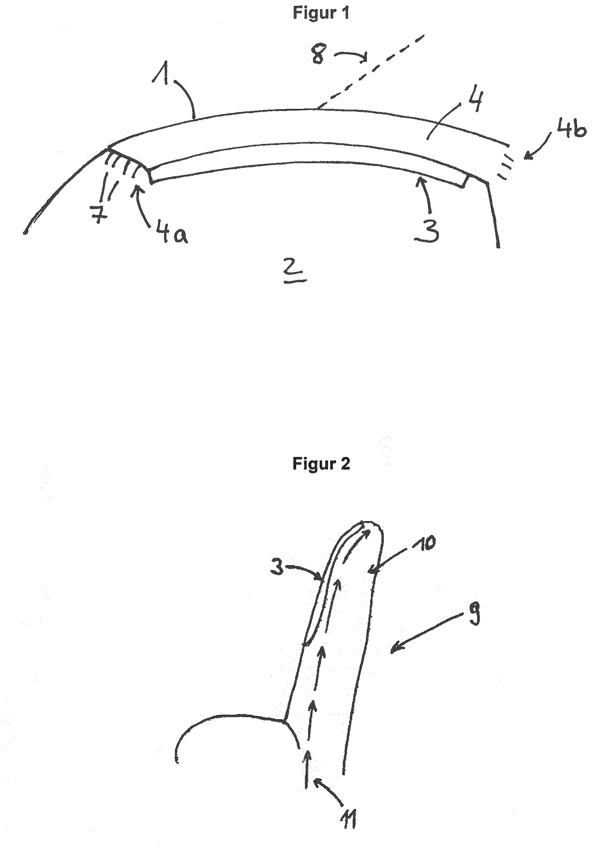

In Figur 1 ist schematisch die Decke 1 einer Personenkabine 2 eines Elektroautos dargestellt. An der Unterseite der Decke 1 ist ein Textil 3 derart befestigt, dass zwischen der Decke 1 und dem Textil 3 ein Luft- und Befeuchtungskanal 4 frei bleibt. Das Textil 3 ist dabei in einem nicht näher dargestellten Rahmen aufgenommen, der insgesamt reversibel von der Decke 1 abgenommen werden kann, um einen periodischen Tausch des Textils 3 bzw. dessen Reinigung zu ermöglichen.

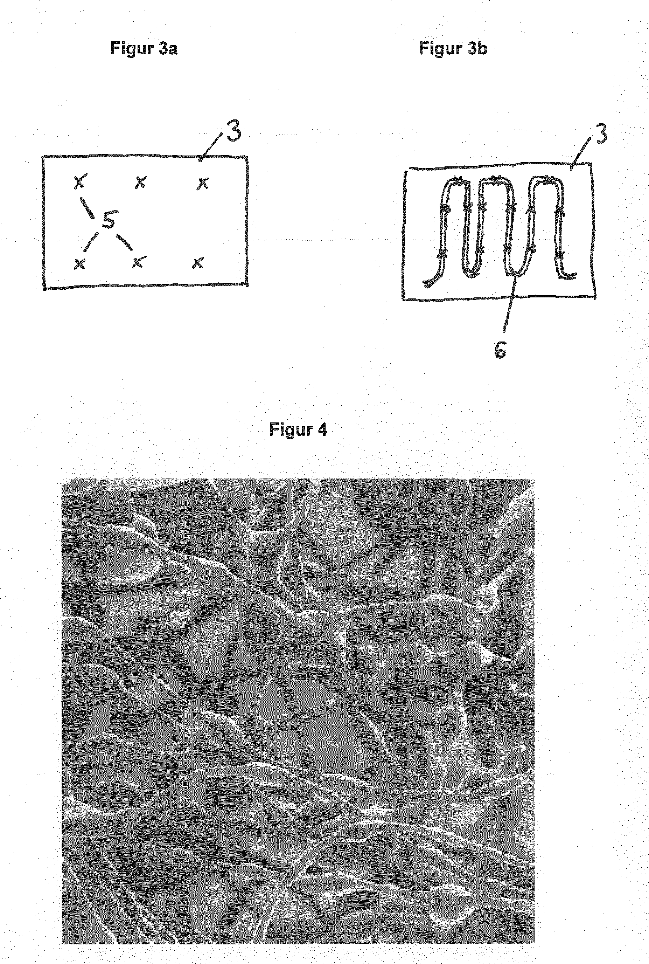

Bei dem Textil 3 handelt es sich um einen Vliesstoff aus Polyesterfasern, die über das gesamte Volumen des Fliesstoffes gleichmäßig mit einer dünnen Schicht aus einem superabsorbierenden, acrylamidhaltigen Polymer beschichtet sind. In Figur 4 ist eine Aufnahme eines derartigen Vliesstoffes aus einem Elektronenmikroskop dargestellt, wobei die durchgehende Beschichtung der Polyesterfasern mit dem superabsorbierenden Polymer erkennbar ist, die stellenweise tropfenförmige Verdickungen an den Fäden ausbildet.

Der Vliesstoff ist beidseitig mit einem Kunstfasergewebe kaschiert und mit Silberionen imprägniert, um ein Verkeimen zu verhindern.

Innerhalb des Kanals 4 ist eine in der Figur 1 nicht näher dargestellte Befeuchtungsvorrichtung vorgesehen, um Wasser an das Textil abgeben zu können. Geeignete Ausgestaltungen der Befeuchtungsvorrichtung sind in Figur 3 dargestellt. So wird in Figur 3a eine Variante dargestellt, in der einzelne Sprühdüsen 5 in regelmäßigen Abständen über die Fläche des Textils 3 verteilt angeordnet sein. In Figur 3b wird eine alternative Variante dargestellt, wobei ein mäandernderförmig an der Fläche des Textils 3 verlaufender Wasserschlauch 6 mit einer Vielzahl von Austrittsöffnungen vorgesehen ist. Die Düsen 5 bzw. der Schlauch 6 stehen jeweils mit einem nicht näher dargestellten Wassertank in Verbindung, wobei eine Pumpe vorgesehen ist, um definierte Wassermengen zu definierten Zeitpunkten aus dem Tank zu den Düsen 5 bzw. durch den Schlauch 6 zu fördern.

Der Kanal 4 dient ferner der Belüftung des Textils 3 und umfasst eine im vorderen Bereich angeordnete Lufteinlassöffnung 4a sowie eine im rückseitigen Bereich angeordnete Luftauslassöffnung 4b. An der Lufteinlassöffnung 4a sind Luftleitelemente 7 vorgesehen, um den Luftstrom durch den Kanal 4 regulieren zu können. Die Luftauslassöffnung 4b mündet an die Außenseite der Decke. Als denkbare Variante ist in der Figur mit gepunkteten Linien eine Dachluke 8 angedeutet, mit der ein größerer Bereich des Kanals 4 freigegeben werden kann, um fallweise eine starke Durchlüftung des Textils 3 zu ermöglichen.

Die Lufteinlassöffnung 4a ist nahe der Oberkante der Windschutzscheibe des Fahrzeugs angeordnet, sodass insbesondere auch von der Lüftungsanlage des Fahrzeugs über die Windschutzscheibe geleitete Luft in den Kanal 4 eingeleitet werden kann. Alternativ können die Lufteinlassöffnungen 4a auch so ausgebildet sein, dass Außenluft in den Kanal 4 eingelassen wird. In diesem Fall kann eine Durchströmung des Kanals 4 bereits durch den Fahrtwind erfolgen.

In der Figur nicht näher dargestellter Gewichtssensor erkennt die Beladung des Textils 3 mit Wasser und leitet diese Information an eine Steuereinheit weiter, die ihrerseits mit einer Anzeigeeinrichtung im Fahrzeug sowie mit der Befeuchtungsvorrichtung und mit den Luftleitelementen 7 in Verbindung steht. So kann eine bedarfsgerechte Regelung der Beaufschlagung und Belüftung des Textils erreicht werden, was mit einer Regelung der vom Textil verrichteten Kühlleistung einhergeht.

Die in Figur 1 gezeigte Anordnung unter der Decke des Fahrzeugs ist vorteilhaft, da sich das Textil über eine große, ununterbrochene Fläche erstrecken kann und die Durchlüftung und Bewässerung optimal realisiert werden kann. Eine Abfuhr der feuchten Luft aus dem Innenraum ist in einfacher Weise möglich. Das Textil kann gegenüber dem Innenraum kaschiert werden, sodass es für die Insassen nicht sichtbar ist. Da die Temperatur nahe der Decke typischerweise am höchsten ist, wird zudem eine optimale Kühlwirkung erreicht.

In einer weiteren Ausführungsform, die in Figur 2 schematisch dargestellt ist, ist das Textil 3 im oberen Bereich der Rückenlehne 10 eines Passagiersitzes 9 angeordnet. Das Textil 3 erstreckt sich nicht bis in den unteren Bereich der Rückenlehne 10, um eine Kühlung im Nierenbereich des Passagiers zu vermeiden. Das Textil 3 kann an der Vorderseite mit einem Abstandsgewirk kaschiert sein, sodass sich der Passagier das Textil 3 nicht berührt. Ist eine stärkere Kühlung erwünscht, dann das Textil 3 aber auch unmittelbar zum Rücken des Passagiers exponiert werden. Denkbar ist auch eine einseitige Kaschierung des Textils mit einem Abstandsgewirk und eine Befestigungs des Textils derart, dass es je nach Bedarf gewendet werden kann. In der Figur schematisch mit Pfeilen 11 angedeutet sind auch Luftleitkanäle innerhalb des Sitzes 9, um das Textil 3 aktiv Belüften zu können und Abluft aktiv von dem Textil 3 und vorzugsweise insgesamt aus dem Fahrzeuginnenraum ableiten zu können.

Der Vorteil einer Anbringung des Textils direkt im Sitz ist insbesondere die für den Passagier unmittelbar spürbare Kühlwirkung.

## Patentansprüche

1. Fahrzeug mit einem Innenraum, vorzugsweise einer Personenkabine oder einem Lastenraum, wobei in oder in thermischem Kontakt mit dem Innenraum ein Textil angeordnet ist, das einen Vliesstoff umfasst, der mit einem superabsorbierenden Polymer beladen ist
**dadurch gekennzeichnet,**
**dass** das Fahrzeug eine Befeuchtungsvorrichtung aufweist, die ausgebildet ist, Wasser an das Textil abzugeben.

2. Fahrzeug nach Anspruch 1, **dadurch gekennzeichnet, dass** es sich bei dem Fahrzeug um einen elektrisch betriebenen Personenkraftwagen handelt.

3. Fahrzeug nach einem der vorhergehenden Ansprüche, **dadurch gekennzeichnet, dass** ein Belüftungsmechanismus vorgesehen ist, der ausgebildet ist, Luft über das Textil zu leiten.

4. Fahrzeug nach einem der vorhergehenden Ansprüche, **dadurch gekennzeichnet, dass** ein Beladungssensor vorgesehen ist, der ausgebildet ist, die Beladung des Textils mit Wasser zu erkennen.

5. Fahrzeug nach einem der vorhergehenden Ansprüche, **dadurch gekennzeichnet, dass** Wärmeleitelemente zur Einleitung von Wärme aus dem Innenraum in das Textil vorgesehen sind.

6. Fahrzeug nach einem der vorhergehenden Ansprüche, **dadurch gekennzeichnet, dass** das Textil wechselbar in einem Gehäuse angeordnet ist.

7. Fahrzeug nach einem der vorhergehenden Ansprüche, **dadurch gekennzeichnet, dass** das Textil unter der Decke des Innenraums angeordnet ist.

8. Fahrzeug nach einem der vorhergehenden Ansprüche, **dadurch gekennzeichnet, dass** im Innenraum des Fahrzeugs ein Passagiersitz vorgesehen ist und dass das Textil an diesem Passagiersitz angeordnet ist, vorzugsweise im Bereich der Rückenlehne.

9. Fahrzeug nach einem der vorhergehenden Ansprüche, **dadurch gekennzeichnet, dass** an der Oberfläche des Textils einseitig oder beidseitig ein Abstandsgewirk angeordnet ist.

## Claims

1. Vehicle, comprising an interior, preferably a passenger compartment or a load space, wherein a textile is arranged so as to be in or in thermal contact with the interior, which textile comprises a non-woven fabric which is laden with a superabsorbent polymer,
**characterised in that**
the vehicle comprises a moistening device which is designed to output water to the textile.

2. Vehicle according to claim 1, **characterised in that** the vehicle is an electrically operated passenger car.

3. Vehicle according to one of the preceding claims, **characterised in that** a ventilation mechanism is provided which is designed to guide air over the textile.

4. Vehicle according to one of the preceding claims, **characterised in that** a load sensor is provided, which is designed to identify the loading of the textile with water.

5. Vehicle according to one of the preceding claims, **characterised in that** heat conducting elements are provided for introducing heat from the interior into the textile.

6. Vehicle according to one of the preceding claims, **characterised in that** the textile is arranged in a housing in an exchangeable manner.

7. Vehicle according to one of the preceding claims, **characterised in that** the textile is arranged under the ceiling of the interior.

8. Vehicle according to one of the preceding claims, **characterised in that** a passenger seat is provided in the interior of the vehicle, and **in that** the textile is arranged on said passenger seat, preferably in the region of the backrest.

9. Vehicle according to any of the preceding claims, **characterised in that** a spacer fabric is arranged on the surface of the textile, on one or both sides.

## Revendications

1. Véhicule comprenant un habitacle, de préférence une cabine pour passager ou un espace de chargement, dans lequel un textile, qui comprend un nontissé chargé d'un polymère superabsorbant, est disposé dans l'habitacle ou en contact thermique avec celui-ci,
**caractérisé en ce que**
le véhicule comporte un dispositif d'humidification, qui est conçu pour transmettre de l'eau au textile.

2. Véhicule selon la revendication 1, **caractérisé en ce que** le véhicule est une voiture particulière à entraînement électrique.

3. Véhicule selon l'une des revendications précédentes, **caractérisé en ce qu'**un mécanisme de ventilation est prévu, qui est conçu pour guider de l'air sur le textile.

4. Véhicule selon l'une des revendications précédentes, **caractérisé en ce qu'**un capteur de charge est prévu, qui est conçu pour reconnaître la charge en eau du textile.

5. Véhicule selon l'une des revendications précédentes, **caractérisé en ce que** des éléments thermoconducteurs sont prévus pour l'introduction dans le textile de chaleur provenant de l'habitacle.

6. Véhicule selon l'une des revendications précédentes, **caractérisé en ce que** le textile est disposé de manière remplaçable dans un boîtier.

7. Véhicule selon l'une des revendications précédentes, **caractérisé en ce que** le textile est disposé sous le plafond de l'habitacle.

8. Véhicule selon l'une des revendications précédentes, **caractérisé en ce qu'**un siège passager est prévu dans l'habitacle du véhicule et **en ce que** le textile est disposé sur ce siège passager, de préférence dans la zone du dossier.

9. Véhicule selon l'une des revendications précédentes, **caractérisé en ce qu'**un tricot d'espacement est disposé d'un côté ou des deux côtés sur la surface du textile.
